# EUROPÄISCHE PATENTANMELDUNG

(11) **EP 2 899 011 A1**
(43) Veröffentlichungstag der Anmeldung: **29.07.2015**
(21) Anmeldenummer: 15155709.7
(22) Anmeldetag: 24.11.2009
(51) Int. Cl.: B29C 67/00, B28B 11/00, B28B 1/00, B41M 3/16

(54) **Verfahren und Vorrichtung zum Erzeugen einer dreidimensionalen Struktur auf einer Oberfläche eines Objektes**

(30) Priorität: 25.11.2008 AT 18442008
(62) Teilanmeldung aus: 09014602.8
(71) Anmelder: Durst Phototechnik Digital Technology GmbH, 9900 Lienz (AT)
(72) Erfinder: Von Aufschnaiter, Norbert, 39052 St. Pauls/Eppau (IT); Obertegger, Franz, 39042 Brixen (IT)
(74) Vertreter: Burger, Hannes

(57) **Zusammenfassung**

Die Erfindung betrifft ein Verfahren und eine Vorrichtung zum Erzeugen einer dreidimensionalen Struktur (2) auf zumindest einem Teil (5) einer Oberfläche (6) eines Objektes (3). Mit einer Abgabevorrichtung (17) einer durch eine Steuervorrichtung (9) gesteuerten Applikationsvorrichtung (4) werden Tropfen (12,13) einer strukturbildenden Masse (14) auf die Oberfläche (6) des Objektes (3) abgegeben. Das Objekt (3) und die Applikationsvorrichtung (4) werden relativ zueinander bewegt, wobei das Objekt (3) auf einer Positioniervorrichtung (7) positioniert gehaltert und die dreidimensionale Struktur (2) anschließend gehärtet wird. Die Position, die Anzahl und/ oder das Volumen der Tropfen (12,13) der strukturbildenden Masse (14) wird durch die Steuervorrichtung (9) in Abhängigkeit von der dreidimensionalen Struktur (2) in einer zu einer Auflagefläche (25) der Positioniervorrichtung (7) für das Objekt (3) parallelen Ebene in unterschiedlichen Richtungen, sowie in Richtung quer zur Ebene ermittelt. Die Steuervorrichtung steuert dann die Abgabe der Tropfen (12,13) mittels der Abgabevorrichtung (17) der Applikationsvorrichtung (4,19), sodass diese auf die Oberfläche (6) des Objektes (3) positioniert abgegeben werden.

## Beschreibung

Die Erfindung bezieht sich auf ein Verfahren und eine Vorrichtung zum Erzeugen einer dreidimensionalen Struktur zumindest auf einen Teil einer Oberfläche eines Objektes nach dem Oberbegriff der Ansprüche 1 und 6.

Bei der Herstellung von Produkten mit dreidimensional gestalteten Teilen von Oberflächen von, insbesondere bei Keramikbauteilen wie zB Fliesen, Kacheln, Holzbauteilen, ist angesichts der herrschenden Produktvielfalt eine weitere Diversifikation der Produktpaletten notwendig um am Markt weiterhin bestehen zu können. Hersteller setzen auf eine Variation des Erscheinungsbildes für Produkte, die über eine unterschiedliche Farbgebung hinausgeht. So wird heute beispielsweise versucht, natürliche Stoffe wie Granit, Marmor, Keramik, Holz, Stoff zu imitieren, mitsamt ihrer dreidimensionalen Strukturbeschaffenheiten. Ein Erzielen eines Rutschschutzes oder ein Aufbringen von Glanzeffekten sowie ein Applizieren von Granulaten sind weitere Beispiele für die Erweiterung der Angebotsbandbreite bei Keramikfliesen.

Die Lösungsansätze, mit denen versucht wird diese Diversifikation zu erreichen, sind unterschiedlich. So werden etwa bei der Fliesenherstellung oder Melaminharzplattenherstellung Presswerkzeuge mit strukturierten Oberflächen angewandt, um bereits die Rohlinge mit einer Struktur zu versehen. Granulat-Aufschüttmaschinen werden, um die Oberfläche zu strukturieren oder um Glanzeffekte zu erreichen, ebenso eingesetzt wie ein zusätzlicher Rotationssiebdruck-Schritt mit relativ grober Maschenweite. Der Einsatz strukturierter Presswerkzeuge ist ein durchaus gangbarer Weg für hohe Stückzahlen, jedoch nicht frei von Nachteilen: So ist die Herstellung eines Presswerkzeuges durchaus teuer, und eine solche Form lässt keinerlei Variation der Struktur der Fliesenoberfläche zu. Der Rotationssiebdruck ist für sehr große Stückzahlen zwar interessant, aber auch hier kann die Struktur nur sehr eingeschränkt geändert werden. Eine Verwendung von Granulat-Aufschüttmaschinen ist eine Lösung für ein beispielhaftes Aufbringen eines rutschhemmenden Belages, allerdings kann so keine definierte Struktur auf der Oberfläche von Objekten erzielt werden.

Weiters sind zahlreiche stereolithographische Vorrichtungen und Verfahren bekannt, so beispielsweise aus der DE 3 588 184 T2. Derartige Verfahren funktionieren etwa derart dass ein lichtaushärtendes Polymer (Photopolymer) von einem computergesteuerten Laser in einem Bad in dünnen Schichten ausgehärtet wird. Nach dem Aushärten einer so erzeugten Schicht wird diese weiter in die Flüssigkeit im Bad abgesenkt und auf eine Position manövriert, die um den Betrag einer Schichtstärke unter der vorherigen liegt. Dann fährt der Laser auf der neuen Schicht über die Flächen, die ausgehärtet werden sollen. Nach dem Aushärten erfolgt der nächste Schritt, so dass nach und nach ein dreidimensionales Modell entsteht. Derartige Techniken werden im Rapid Prototyping bei der Produktentwicklung oder bei Rapid Manufacturing für die Herstellung von Kleinserien (beispielsweise im Medizintechnikbereich) eingesetzt. Es ist möglich, 3D-CAD-Daten direkt an eine Stereolithografievorrichtung zu senden, um so nach vergleichsweise kurzer Zeit einen Prototypen des CAD-Modells in Händen zu halten. Eine Verwendung dieser Techniken in der Keramikindustrie oder für das Aufbringen einer dreidimensionalen Struktur auf ein Objekt ist bisher nicht bekannt und ist wohl auch aufgrund der für eine Serienproduktion notwendigen hohen Erzeugungsgeschwindigkeiten nicht praktikabel.

Der vorliegenden Erfindung liegt die Aufgabe zugrunde, ein Verfahren und eine Vorrichtung zum Erzeugen dreidimensionaler Strukturen auf einer Oberfläche eines Objektes, beispielsweise einer Keramikfliese, anzugeben, welches eine große Vielfalt von möglichen Strukturen bei gleichzeitig hoher Flexibilität und möglichst hoher Herstellgeschwindigkeit gewährleistet, wobei ein zusätzliches Augenmerk auf niedrige Herstellungskosten gelegt wird.

Diese Aufgabe wird bei diesem Verfahren dadurch gelöst, dass die Position, die Anzahl und/ oder das Volumen der Tropfen der strukturbildenden Masse durch die Steuervorrichtung in Abhängigkeit von der dreidimensionalen Struktur in einer zu einer Auflagefläche der Positioniervorrichtung für das Objekt parallelen Ebene in unterschiedlichen Richtungen, sowie in Richtung quer zur Ebene ermittelt, und die Tropfen mittels der Abgabevorrichtung der Applikationsvorrichtung auf die Oberfläche des Objektes positioniert abgegeben werden.

Mit dieser Erfindung ist es möglich, komplexere Strukturen in kurzer Zeit und mit hoher Präzision auf zumindest einen Teil der Oberfläche eines Objektes zu applizieren. Die Flexibilität dieses digitalen Verfahrens ist sehr hoch, die Auswahl der möglichen und applizierbaren Motive ist nahezu unendlich groß. Es ist möglich, ohne große und teure Umrüst- und Vorbereitungsmaßnahmen kleinere Serien oder Sets aus mehreren Objekten kostengünstig und schnell herzustellen. Spezielle Kundenwünsche können rasch und maßgeschneidert realisiert werden. Eine Anwendung im Bereich der Möbelindustrie ist denkbar, so kann unter anderem eine Holzstruktur auf einer glatten Oberfläche (z.B. MDF-Platten, Melaminplatten) zur Anwendung bei Möbel, Türen, Fenstern, Fassadenteilen und dergleichen erzeugt werden. Ein weiterer Anwendungsbereich eröffnet sich mit der Herstellung von Effektstrukturen, wie beispielsweise ein Linsenrasterbild. Derartige Bilder ermöglichen 3D-Effekte ohne die Benutzung von 3D-Brillen, ebenso kann ein Bildänderungseffekt damit erzielt werden durch Änderung des Betrachtungswinkels.

Die Erfindung stellt für die Produktion von Keramikfliesen eine Vorrichtung zum Erzeugen einer dreidimensionalen Struktur auf einer Oberfläche eines Objektes zur Verfügung, welche eine Applikationsvorrichtung mit wenigstens einem Druckkopf aufweist, mit einer Zufuhreinrichtung für die Zufuhr des Objektes an die Applikationsvorrichtung, mit einer Härteeinrichtung, und mit einer Steuereinrichtung zur Steuerung der Applikationsvorrichtung, der Zufuhreinrichtung und der Härteeinrichtung, und ist dadurch gekennzeichnet, dass der aus dem wenigstens einen Druckkopf der Applikationsvorrichtung austretende Massenstrom der strukturbildenden Masse in Abhängigkeit der auszubildenden Höhe steuerbar ist.

Nach einem ersten bevorzugten Ablauf des Verfahrens nach der Erfindung ist vorgesehen, dass während des Aufbringens der Tropfen eine kontinuierliche unidirektionale Relativbewegung zwischen Abgabevorrichtung und Objekt erfolgt. Dadurch ist ein beliebiger räumlicher und flächiger Verlauf der dreidimensionalen Struktur herstellbar.

Eine weitere vorteilhafte Maßnahme liegt darin, dass die Tropfen während einer kontinuierlichen Bewegung der Abgabevorrichtung bzw. der Applikationsvorrichtung relativ zum Objekt erfolgt, worauf die Abgabe der Tropfen durch die Applikationsvorrichtung unterbrochen und das Objekt um ein vorbestimmtes Ausmaß quer zur vorhergehenden Bewegungsrichtung zwischen der Abgabevorrichtung bzw. der Applikationsvorrichtung und dem Objekt relativ verstellt wird, worauf weitere Tropfen der strukturbildenden Masse durch die Applikationsvorrichtung auf die Oberfläche des Objektes aufgebracht werden. Dadurch ist mit Vorteil möglich, mit so genannten Scanndruckköpfen zu arbeiten und mit einer geringeren Anzahl an Abgabevorrichtungen das Auslangen zu finden. Darüber hinaus kann durch eine größere Zeitversetzung zwischen dem Aufbringen nebeneinander oder übereinanderliegender Tropfen bei der dreidimensionalen Struktur ein exakterer Aufbau der Struktur in Richtung quer zur Auflagefläche insbesondere im Bezug auf eine vorgesehene Querschnittsform der Struktur erreicht werden.

Es ist weiters auch möglicht, dass die Tropfen der strukturbildenden Masse für die dreidimensionale Struktur in nur einem Durchlauf auf die Oberfläche des Objektes bevorzugt kontinuierlich aufgebracht werden. Auf diese Weise kann ein kontinuierlicher Materialfluss in der Produktion gewährleistet werden.

Vorteilhaft ist auch ein Vorgehen bei dem das Volumen der Tropfen in Abhängigkeit von der Höhe der dreidimensionalen Struktur in einer quer bevorzugt senkrecht zur Auflagefläche der Positioniervorrichtung fortlaufenden Richtung festgelegt wird. Vorteilhaft ist hierbei, dass die Bearbeitungsgeschwindigkeit beim Auftragen und Herstellen der dreidimensionalen Struktur auch dann, wenn die quer bzw. senkrecht zur Auflagefläche der Positioniervorrichtung verlaufende Höhe stark unterschiedlich ist, beibehalten werden kann.

Ein störungsfreies Abgeben der Tropfen der strukturbildenden Masse kann aber auch dadurch erreicht werden, dass das Volumen der Tropfen der strukturbildenden Masse durch Verwendung von Abgabevorrichtungen zur Abgabe von Tropfen mit unterschiedlichen Volumen der strukturbildenden Masse festgelegt wird.

Eine äußerst variable Abgabe von Tropfen mit unterschiedlichem Volumen wird dadurch erreicht, dass das Volumen der Tropfen der strukturbildenden Masse durch die Ansteuerung einer Austragvorrichtung der Abgabevorrichtung erzeugt wird.

Nach der Erfindung kann die senkrecht zur Auflagefläche verlaufende Höhe der dreidimensionalen Struktur durch Variation der Anzahl der Tropfen der strukturbildenden Masse pro Flächeneinheit der Oberfläche des Objektes hergestellt werden. Dies ermöglicht einen schnellen Aufbau einer sehr variabel ausgestalteten dreidimensionalen Struktur in nur einem Durchlauf. Die Variation des Volumens der Tropfen der strukturbildenden Masse durch die Ansteuerung zumindest einer der nachstehenden Antriebe der Austragvorrichtung wie eines Piezo-Antriebs, eines Valve-Jet-Antriebs, eines elektrostatischen, eines thermischen oder akustischen Antriebs bzw. eines Erregers über die Steuervorrichtung gesteuert erfolgen. Diese Arten von Druckköpfen sind gebräuchlich und in der Industrie erprobt, wodurch die Verfügbarkeit derartiger Verfahren in der Massenproduktion erhöht wird.

Eine Variation des Volumens der Tropfen der strukturbildenden Masse kann auch durch eine Kombination von Abgabevorrichtungen zur Abgabe der strukturbildenden Masse mit unterschiedlichen Tropfenvolumen erfolgen, wodurch auch auf kürzeste Distanz größere Höhenunterschiede in der strukturbildenden Masse erzielt werden können.

Eine andere Verfahrensvariante kann vorsehen, dass die zu erzeugende dreidimensionale Struktur einem vorgegebenen ein- oder mehrfarbigen Bildmotiv zugeordnet wird. Damit können nahezu unendlich viele Bild- und Strukturmuster abgebildet werden.

Nach der Erfindung kann die quer zur Auflagefläche für das Objekt ausgerichtete Höhe der zu erzeugenden dreidimensionalen Struktur aus einem Farbauszug oder aus einer mathematischen Kombination von mehreren Farbauszügen eines mehrfarbigen Bildmotivs extrahiert werden. Es besteht so die Möglichkeit, aus der Farbinformation eines zweidimensionalen Bildes ein Höhenmodell abzuleiten, wodurch ein separates 3D-Modell nicht erforderlich ist.

Für eine Erhöhung der Flexibilität kann jedoch auch vorgesehen sein, dass die quer zur Auflagefläche für das Objekt ausgerichtete Höhe der zu erzeugenden dreidimensionalen Struktur aus einem dreidimensionalen CAD-Modell extrahiert wird. Damit können beispielsweise Strukturen wie Linsenraster schnell und effizient hergestellt werden.

In einer Weiterbildung der Erfindung kann vor dem Erzeugen der dreidimensionalen Struktur das vorgegebene ein- oder mehrfarbige Bildmotiv auf die Oberfläche des Objektes aufgebracht werden. Auch hier ist eine schnelle und effiziente Herstellung von Linsenrasterbildern oder Effektglasuren beispielgebend.

Bei einem weiteren vorteilhaften Verfahrensablauf kann vorgesehen sein, dass nach dem Erzeugen der dreidimensionalen Struktur das vorgegebene ein- oder mehrfarbige Bildmotiv auf die Oberfläche der dreidimensionalen Struktur aufgebracht wird. Auf diese Weise kann eine vorgegebene Struktur schnell und günstig mit Farbinformation versehen werden, beispielsweise einer Marmor- oder einer Holzstruktur.

Nach der Erfindung kann das vorgegebene ein- oder mehrfarbige Bildmotiv vermittels einer Applikationsvorrichtung für Tropfen aus mit Farbpigmenten versehenen Fluiden auf das Objekt oder auf die dreidimensionale Struktur aufgebracht werden, bereits bestehende Bilddruckvorrichtungen können in Kosten sparender Weise weiter genützt werden können.

Die Erfindung kann vorsehen, dass das Aufbringen des Bildmotivs und das Aufbringen der dreidimensionalen Struktur derart aufeinander abgestimmt werden, dass das Bildmotiv und die dreidimensionale Struktur deckungsgleich übereinander angeordnet werden, wodurch eine hohe Produktqualität erzielt wird.

Das aufeinander Abstimmen des übereinander Aufbringens von Bildmotiv und dreidimensionaler Struktur kann für ein präzises Ergebnis anhand eines Messsignals einer der Applikationsvorrichtung zugeordneten Sensoreinrichtung erfolgen.

Diese Sensoreinrichtung kann mit einer für die Industrie notwendigen Genauigkeit die Position und/oder die Geometrie des Objektes erfassen.

Vorteilhaft ist für das vorliegende erfindungsgemäße Verfahren, wenn die strukturbildende Masse aus einem niedrigviskosen und einem hochviskosen Bestandteil zusammengesetzt wird, da die zur Ausbildung der dreidimensionalen Struktur benötigten hochviskosen Bestandteil einfach über das Fluid transportiert und ausgetragen werden können.

Für das Verfahren zur Herstellung der dreidimensionalen Struktur eignet sich eine strukturbildende Masse, bei der niedrigviskose Bestandteil ein Fluid und der hochviskose Bestandteil durch ein anorganisches Partikel gebildet wird, da die anorganischen Partikel an die Grundmaterialien auf die die strukturbildende Masse aufgebracht wird einfach angepasst werden können.

Nach einer weiteren Variante des erfindungsgemäßen Verfahrens kann vorgesehen werden, dass die strukturbildende Masse für das Erzeugen der dreidimensionalen Struktur eine Suspension oder eine Dispersion von keramischen oder silikatischen Materialien aufweist. So lässt sich durch Härten dieser Masse eine Festigkeit erzielen, die der des mit der Struktur versehenen Objekts entspricht.

Erfindungsgemäß ist es weiters auch möglich, dass die strukturbildende Masse für das Erzeugen der dreidimensionalen Struktur eine strahlungshärtbare Initiator-Monomermischung aufweist. Damit lassen sich kostengünstig Strukturen hoher Genauigkeiten erzielen.

Die für das Erzeugen der dreidimensionalen Struktur verwendete strukturbildende Masse kann zur Verkürzung der Bearbeitungszeit transparent, opak und/oder farbig sein. Dadurch kann auf unterschiedliche Farbtemperaturen und Grundgestaltungen, insbesondere an die unterschiedlichen Härteverfahren wie beispielsweise UV - Licht, eine besser Anpassung erzielt werden.

Bei einer bevorzugten Weiterführung der Erfindung kann zur Steigerung der Fertigungsqualität eine Stabilisierung der aufgebrachten strukturbildende Masse im Zeitraum zwischen Aufbringen und Härten erfolgen.

Nach der Erfindung kann die Stabilisierung in Kosten sparender Weise durch Trennung der niedrigviskosen von den hochviskosen Bestandteilen der aufgebrachten strukturbildenden Masse infolge einer Kapillarwirkung der Oberfläche des Objektes erfolgen.

Eine weitere vorteilhafte Ausbildung der Erfindung kann vorsehen, dass das Härten der erzeugten dreidimensionalen Struktur mittels Infrarot-, und/oder UV- und/oder Elektronenstrahlung erfolgt. Diese Maßnahmen oder deren Kombinationen sorgen für ein qualitativ hochwertiges und zielgerichtetes Ergebnis beim Härten je nach Anwendungsfall.

In einer weiteren bevorzugten konstruktiven Ausgestaltung der Erfindung kann vorgesehen sein, dass das Härten der erzeugten dreidimensionalen Struktur mittels Sintern oder Einbrennen bei Temperaturen oberhalb des Erweichungspunktes der anorganischen Partikel in der strukturbildenden Masse erfolgt. Auf diese Weise kann kostengünstig und schnell eine widerstandsfähige Glasur hergestellt werden.

Für ein optimales Durchhärten der aufgebrachten strukturbildende Masse kann vorgesehen sein, dass das Härten der erzeugten dreidimensionalen Struktur in einem einzigen oder in mehreren hintereinander geschalteten gleichen oder unterschiedlichen Härtungsvorgängen stattfindet.

Verfahrensgemäß kann die Oberfläche des Objekts glatt oder vorstrukturiert ausgebildet werden. Damit kann weiterhin eine hohe Flexibilität gewährleistet werden.

Die erfindungsgemäße Aufgabe wird aber auch eigenständig durch eine Vorrichtung zum Erzeugen einer dreidimensionalen Struktur auf zumindest einem Teil einer Oberfläche eines Objektes, mit einer Applikationsvorrichtung gelöst, bei der die Steuervorrichtung die aus der wenigstens einen Abgabevorrichtung der Applikationsvorrichtung austretenden Tropfen der strukturbildenden Masse in Abhängigkeit vom Verlauf und der quer insbesondere senkrecht zur Auflagefläche auszubildenden Höhe der der dreidimensionalen Struktur steuert. Dadurch kann mit einem in der Massenproduktion ausgereiften System zum Aufbringen der Massen mit den aus den bekannten Massenproduktionstechnologien einsetzbaren Vorrichtungteilen zum Auftragen von Massen zum Herstellen von in beliebige Raumrichtungen und Flächenrichtungen verlaufenden Strukturen kombiniert werden.

Es kann vorgesehen sein, dass die Steuervorrichtung die Applikationsvorrichtung und/oder die Positioniervorrichtung zur Bewegung relativ zueinander derart ansteuert, dass die dreidimensionale Struktur in einer einzigen kontinuierlichen und/oder unidirektionalen Bewegung an zumindest einem Teil der Oberfläche des Objektes erzeugbar ist. Durch diese Maßnahme kann ein schnelles und wirtschaftliches Ausbilden der dreidimensionalen Struktur erfolgen.

Nach einer weiteren konstruktiven Ausführungsvariante der Erfindung kann vorsehen, dass die Applikationsvorrichtung eine Abgabevorrichtung mit mehreren Düsen, welchen eine Austragvorrichtung zugeordnet ist, umfassen. Dieser in der Industrie häufig eingesetzten digitale Applikationsvorrichtung ermöglicht einen flexiblen und schnellen Einsatz, wobei die zu erzeugenden dreidimensionalen Strukturen laufend geändert oder ausgewechselt werden können. Dabei ist denkbar, dass die Abgabevorrichtung starr befestigt ist, während das Objekt beim Aufbau der dreidimensionalen Struktur bewegt wird. Ebenso denkbar ist jedoch auch die Variante, in der das Objekt beim Aufbau der dreidimensionalen Struktur unbewegt verbleibt während die Applikationsvorrichtung entlang des Objektes bewegt wird.

In industriebewährter Weise ein kann die Austragvorrichtung der Abgabevorrichtung zumindest einen der nachstehenden Antriebe wie einen Piezo-Antrieb, einen Valve-Jet-Antrieb, einen elektrostatischen, thermischen oder akustischen Antrieb umfassen.

Eine weitere konstruktive Ausführung der Erfindung kann in ebenfalls industrieerprobter Weise vorsehen, dass die Abgabevorrichtung einen Continuous-Ink-Jet-Antrieb aufweist.

Für das Erzielen eines schnellen Strukturaufbauvorganges kann vorgesehen sein, dass die Düsen der Abgabevorrichtung der Applikationsvorrichtung zumindest über die gesamte Breite des mit der dreidimensionalen Struktur zu versehenden Teiles des Objekts angeordnet sind (Düsenarrays).

Für eine weitere Steigerung der Strukturaufbaugeschwindigkeit können die Düsen der Abgabevorrichtung in mehreren Reihen hintereinander angeordnet sein.

Nach der Erfindung kann die Härteeinrichtung Infrarotstrahler und/oder Electron-Beam-Strahler und/oder UV-Strahler aufweisen. So kann für jeden Einsatzzweck, bzw. für den jeweiligen Materialtyp der strukturbildenden Masse das am besten geeignete Härteverfahren angewendet werden.

In einer weiteren bevorzugten konstruktiven Ausgestaltung der Erfindung kann vorgesehen sein, dass entlang der als Zufuhrrichtung ausgebildeten Positioniervorrichtung vor für die dreidimensionale Struktur eine Applikationsvorrichtung angeordnet ist, welche ein in der Steuervorrichtung abgespeichertes ein- oder mehrfarbiges Motiv auf das Objekt oder auf die dreidimensionale Struktur appliziert. Auf diese Art und Weise ist es möglich, 3D-Imitationen von beispielsweise Granitstrukturen oder Effektbilder kostengünstig und schnell zu erstellen Für eine Steigerung der Effizienz und eine Verringerung der Komplexität der Vorrichtung kann vorgesehen sein, dass die Steuervorrichtung mit der Applikationsvorrichtung in der Art verbunden ist, dass das in der Steuervorrichtung und/oder Bilddatenverarbeitungs- und/oder - erkennungsvorrichtung abgespeicherte ein- oder mehrfarbige Bildmotiv lesbar oder für diese konvertierbar ist.

Eine weitere vorteilhafte Ausführungsvariante kann vorsehen, dass eine Information für die Höhe der zu erzeugenden dreidimensionalen Struktur aus einem Farbauszug oder aus einer mathematischen Kombination von mehreren Farbauszügen eines mehrfarbigen Bildmotivs extrahierbar ist. Es besteht so die Möglichkeit, aus der Farbinformation eines zweidimensionalen Bildes ein Höhenmodell abzuleiten, wodurch ein separates 3D-Modell nicht erforderlich ist.

Zur Erhöhung der vielseitigen Anwendbarkeit der Vorrichtung kann vorgesehen sein, dass eine Information der Höhe der zu erzeugenden dreidimensionalen Struktur aus einem dreidimensionalen CAD-Modell extrahierbar ist.

Die Präzision und die Qualität des Endproduktes können dadurch gesteigert werden, dass eine Sensoreinrichtung vorgesehen ist, anhand deren Signals das Aufbringen des Bildmotivs und das Aufbringen der dreidimensionalen Struktur aufeinander abstimmbar sind.

Diese Sensoreinrichtung kann ein in Industrieanwendungen häufig verwendeter Positionssensor sein.

Genaue Messergebnisse bei hoher Zuverlässigkeit können durch optoelektronische Positionssensoren erzielt werden.

Die Erfindung soll anhand der nachfolgenden Zeichnungen näher erläutert werden: Es zeigt:
- Fig. 1: eine schematische Übersichtsdarstellung einer erfindungsgemäßen Vorrichtung zum Erzeugen einer dreidimensionalen Struktur auf einer Oberfläche eines Objektes;
- Fig. 2: eine vergrößerte Darstellung der Abgabevorrichtung der Applikationsvorrichtung in vereinfachter schematischer Darstellung gemäß dem Abschnitt II in Fig. 1;
- Fig. 3: eine vergrößerte Darstellung der Abgabevorrichtungen der Applikationsvorrichtung in vergrößerter schematischer Darstellung gemäß dem Abschnitt III in Fig. 1;
- Fig. 4: eine schematische Darstellung eines Linsenraster-Bildes;
- Fig. 5: ein Objekt mit einer erfindungsgemäß aufgebrachten dreidimensionalen Struktur in schaubildlicher, stark vereinfachter schematischer Darstellung;
- Fig. 6: das Objekt mit der Struktur in Stirnansicht geschnitten und stark vereinfachter Darstellung, gemäß den Linien VI-VI in Fig. 5;
- Fig. 7: das Objekt mit der Struktur in Stirnansicht geschnitten und stark vereinfachter Darstellung, gemäß den Linien VII-VII in Fig. 5;
- Fig. 8: das Objekt mit der Struktur in Stirnansicht geschnitten und stark vereinfachter Darstellung, gemäß den Linien VIII-VIII in Fig. 5;
- Fig. 9: das Objekt nach Fig. 5 in vereinfachter schematischer Darstellung mit den übereinander angeordneten Tropfen der Masse zur Herstellung der dreidimensionalen Struktur;
- Fig. 10: eine schematische Übersichtsdarstellung einer anderen Ausführungsvariante einer erfindungsgemäßen Vorrichtung zum Erzeugen einer dreidimensionalen Struktur auf einer Oberfläche eines Objektes.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

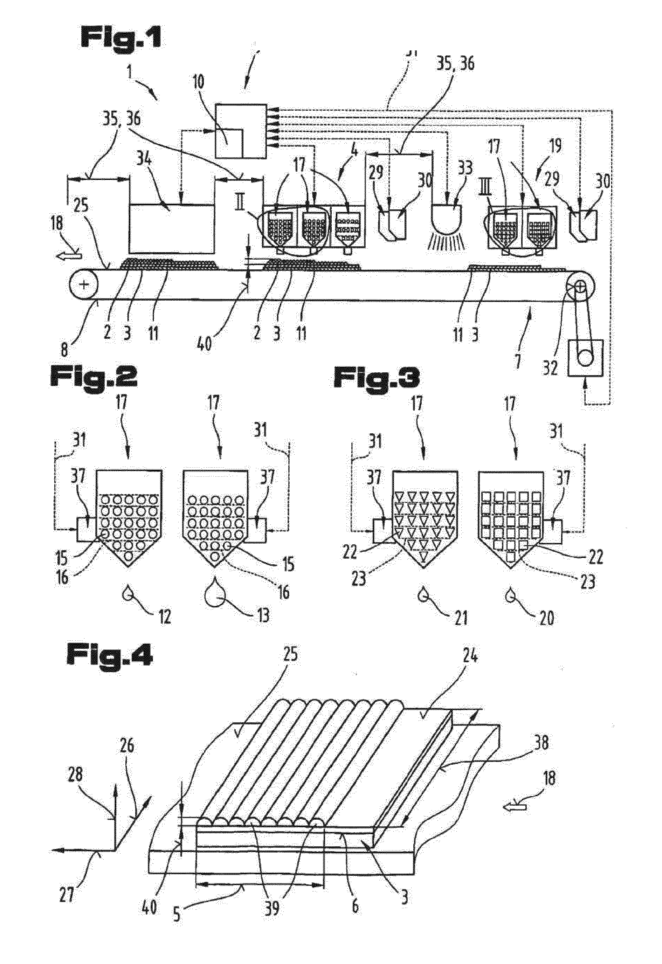

Das in den Figuren 1 bis 4 dargestellte Ausführungsbeispiel der Erfindung umfasst eine Vorrichtung 1 zum Erzeugen einer dreidimensionalen Struktur 2 auf einer Oberfläche eines Objektes 3.

Bei dem dargestellten Ausführungsbeispiel der Erfindung wird die erfindungsgemäße Vorrichtung 1 zum Erzeugen einer dreidimensionalen Struktur 2 mittels einer Applikationsvorrichtung 4 auf zumindest einem Teil 5 einer Oberfläche 6 des Objektes 3, wie z.B. ein Linsenrasterbild, ein räumliches Motiv, eine Zierleiste, eine Holzmaserung beispielsweise auf einer MDF-Platten, Melaminplatten, einem Glasbauteil, Sperrholz, Furnier, Kunststoffplatte, Karton oder dergleichen verwendet. Das Objekt 3 wird auf eine, beispielsweise als ein- oder mehrachsige Zufuhreinrichtung ausgebildete Positioniervorrichtung 7 aufgegeben. Diese Positioniervorrichtung 7 kann zB durch ein in der Keramikindustrie übliches Bandriemenantriebssystem 8 gebildet sein, welches von einem Motor zB einem Asynchronmotor angetrieben wird, der beispielsweise über einen Frequenzumrichter geregelt wird.

Des Weiteren ist zur Steuerung der Vorrichtung 1 eine Steuervorrichtung 9 angeordnet, die auch eine integrierte oder mit dieser über ein Bussystem verbundene Bilddatenverarbeitungsund/oder -erkennungsvorrichtung 10 für ein Motiv 11 und/oder die dreidimensionale Struktur 2 umfassen kann.

Entlang des Bandriemenantriebssystems 8 ist die Applikationsvorrichtung 4 zum Aufbringen der dreidimensionalen Struktur 2 durch die Abgabe von Tropfen 12 bzw. 13 einer strukturbildenen Masse 14 die beispielsweise durch ein mit anorganischen Partikeln 15 vermischtes Fluid 16 - Fig. 2 - gebildet sein kann mit einer Abgabevorrichtung 17 die ebenfalls schematisch dargestellt ist, angeordnet.

Dieser Applikationsvorrichtung 4 kann in Förderrichtung 18 der Objekte 3 beispielsweise eine weitere Applikationsvorrichtung 19 vorgeordnet sein. Auch diese weitere Applikationsvorrichtung 19 ist mit einer bevorzugt jedoch mit mehreren Abgabevorrichtungen 17 ausgestattet, wobei mit diesen Abgabevorrichtungen 17 Tropfen 20, 21 von einem mit anorganischen Pigmenten 22 versetzen Fluid 23 - Fig. 3 - abgegeben werden.

Die Pigmente 22 können wie dies auch schematisch in Fig. 3 bei den beiden Abgabevorrichtungen 17 angedeutet ist, unterschiedlich sein und zwar jeweils nach den gewünschten Farben wie beispielsweise Weiß, Cyan, Magenta usw. sodass ein- oder mehrfärbige Tropfen zur Herstellung eines ein- oder mehrfärbigen Bildes oder eines Motives 11 abgegeben werden können. Dazu wird das Objekt 3 mittels der beispielsweise als Bandriemenantriebssystem 8 ausgebildeten Positioniervorrichtung 7 den Applikationsvorrichtungen 4 und 19 zu bzw. unter diesen hindurchgeführt.

Selbstverständlich ist es auch möglich, dass die Applikationsvorrichtung 19 zum Aufbringen eines Motives 11 der Applikationsvorrichtung 4 zum Aufbringen der dreidimensionalen Struktur 2 in Förderrichtung 18 der Positioniervorrichtung 7 nachgeordnet sein kann. Die Positioniervorrichtung 7 kann durch ein Bandriemenantriebssystem 8, eine Förderrollenbahn, ein Transportband oder einen Mehrachsenkoordinatentisch mit entsprechenden Elementen zum positionierten Halten des Objektes 3 zum Beispiel mittels Vakuum ausgebildet sein. Zum Positionieren des Objektes 3 im Bereich der Applikationsvorrichtungen 4, 19 ist die Positioniervorrichtung 7 mit einer Auflagefläche 25 versehen, mit der das Objekt 3 in der parallel zur Auflagefläche 25 verlaufenden Ebene in den beiden Raumrichtungen 26, 27 fixiert bzw. bei entsprechender Ausbildung der Positioniervorrichtung 7 auch bewegt werden kann. Vornehmlich erfolgt die Bewegung in Vorschubrichtung entsprechend der Förderrichtung 18 und wird dadurch das Objekt 3 unter den Applikationsvorrichtungen 4, 19 positioniert hindurchbewegt. Wird das Objekt 3 mit der Positioniervorrichtung 7 lediglich in Raumrichtung 27 vorwärts bewegt, so wird der Verlauf der dreidimensionalen Struktur 2 in der Raumrichtung 26 durch entsprechende Ansteuerung der Abgabevorrichtungen 17 zum Abgeben der Tropfen 12 und 13 der strukturbildenden Masse 14 gesteuert.

Wie die Fig. 2 und 4 besser zeigen kann durch die Anzahl der abgegebenen Tropfen 12, 13-wie noch später im Detail erläutert werden wird - auf eine Flächeneinheit des Objektes 3 bzw. durch ein unterschiedliches Volumen der Tropfen 12 und 13 in Raumrichtung 28 also die Höhe der Struktur quer bzw. senkrecht zur Auflagefläche 25 hergestellt werden.

Die Applikationsvorrichtungen 4 und 19 können dabei beispielsweise als Single-Pass Anlagen ausgebildet sein, bei denen mehrere Abgabevorrichtungen 17 über die maximale zu beschichtende Breite eines Objektes 3 fix angeordnet sind. Dabei ist es möglich, über die gesamte Breite eines zu bedruckenden Objektes 3 bzw. dessen zu bedruckenden Teil 5 der Oberfläche 6 durchgehend die gewünschte strukturbildende Masse 14 bzw. die gewünschten Farben für die Herstellung des Motives 11 aufzubringen. Vor allem für das Drucken des Motives 11 können jeweils ein oder mehrere Abgabevorrichtungen 17 für jede der Farben Cyan, Magenta, Yellow und Black, sowie falls gewünscht zusätzlich für die Farbe Weiß und/oder für das Aufbringen von diversen Schutzschichten oder Glanzschichten angeordnet sein.

Auch die strukturbildene Masse 14 kann transparent sein. Es ist aber ebenfalls auch möglich, zusätzliche Abgabevorrichtungen 17 vorzusehen, von welchen strukturbildende Massen 14 abgegeben werden können, die mit einer entsprechenden Farbe eingefärbt zur Herstellung transparenter oder opaker dreidimensionaler Strukturen 2 herangezogen werden können.

Es ist alternativ aber auch möglich, die Abgabevorrichtung 17 zum scannenden Aufbringen, von Fluidtropfen auszubilden, sodass die unterschiedlichen Farben, sowie gegebenenfalls die Farbe Weiß und/oder transparent und/oder Schutzschichten aufgetragen werden können. In diesem Fall erstrecken sich die Abgabevorrichtungen 17 nur über einen Teil der Breite des zu bedruckenden Teiles 5 der Oberfläche 6 des Objekts 3, wobei die Farbe streifenweise, während einer Bewegung quer zur Längsrichtung des zu bedruckenden Objektes 3, aufgetragen wird. Das zu bedruckende Objekt 3 wird nach jedem Quervorschub der Abgabevorrichtung 17 über dessen Breite mit der Positioniervorrichtung 7 um ein voreinstellbares Ausmaß in Förderrichtung 18 intermittierend vorwärts bewegt wird.

Des Weiteren ist es aber auch möglich, Abgabevorrichtungen 17 einzusetzen, bei der die Tropfen der Masse 14 bzw. des mit Partikel 15 versehenen Fluides 16 nach dem Austritt aus der Abgabevorrichtung 17 durch ein elektromagnetisches Feld so abgelenkt werden, dass sie auf der richtigen Stelle des zu bedruckenden Objektes 3 auftreffen.

Bei dem Objekt 3 auf das die Masse 14 bzw. das Motiv 11 aufzubringen ist, kann es sich um unterschiedliche Materialien, beispielsweise folienartige Materialien aus Papier, Kunststoff, Metall, Textil, Holz und dergleichen oder um Vliese, Netze und dergleichen oder aber auch um plattenförmiges Material und bandförmiges Material aus den vorgenannten Materialien handeln. Insbesondere ist es möglich, plattenförmiges Material oder Bauteile oder Folien aus Holz, zum Beispiel auch mit zu diesem Holz unterschiedlichen Holzstruktur, Keramik, wie keramische Bauteile als gebrannte Ware oder als Grünlinge, Natursteine oder andere Naturmaterialien wie Matten, Netze, Vliese oder Leder und sonstige Baumaterialien wie beispielsweise Gipskartonplatten, Gipsbauteile oder dergleichen zu bedrucken oder eine dreidimensionale Struktur 2 aufzubringen.

Die vor dem Aufbringen eines Motives 11 mit der Applikationsvorrichtung 19 und/oder vor dem Aufbringen der dreidimensionalen Struktur 2 auf zumindest einem Teil 5 der Oberfläche 6 des Objektes 3, kann mit der Steuervorrichtung 9 verbundenen Sensorvorrichtung 29,30 angeordnet sein, mit der in vorteilhafter Weise ein Erfassen der Position und ein Vermessen des Objektes 3 bzw. des Teiles 5 der Oberfläche 6 des Objektes 3 auf welches ein Motiv 11 und/oder eine dreidimensionale Struktur 2 aufgebracht werden soll, ablegen kann. Selbstverständlich ist es aber auch möglich, das Objekt 3 bereits beim Aufbringen auf das Bandriemenantriebssystem 8 bzw. die Positioniervorrichtung 7, entsprechend zu positionieren oder auf entsprechende Werkstückhalter bzw. -träger positionsgenau aufzulegen. Damit soll sichergestellt werden, dass die zu erzeugende dreidimensionale Struktur 2 falls gewünscht auch deckungsgleich mit dem Motiv 11 beziehungsweise präzise auf dem Objekt 3 bzw. der Keramikfliese oder den Grünling orientiert bzw. appliziert wird. Diese Sensorvorrichtung 29,30 kann zB eine Lasermessvorrichtung oder jede beliebige andere Erkennungsvorrichtung wie zB eine Kamera sein, welche das Messsignal an die Steuervorrichtung 9 übergibt.

Zusätzlich kann falls erforderlich jeder einzelnen oder allen Applikationsvorrichtungen 4 bzw. 19 und/oder deren Abgabevorrichtungen 17 können Sensorvorrichtungen 29,30 mit welchen eine zumindest ein Teil einer auf dem Objekt 3 vorhandenen Bildinformation bzw. eines Motives 11 oder einer dreidimensionalen Struktur 2 oder einer gesondert am Objekt 3 aufgebrachten Markierung erfasst und ausgewertet werden können. Dadurch ist es möglich, dass beispielsweise bei einem zeitversetzten Aufbringen eines Motives 11 und einer dreidimensionalen Struktur 2 eine eindeutige Zuordnung und Erkennung der beispielsweise nachfolgend der Applikationsvorrichtung 4 bzw. 19 zugeführten Objekte 3 vorzunehmen und sicherzustellen, dass auf das jeweilige Objekt 3 das richtige Motiv 11 bzw. weitere Teile des Motives 11 oder die dreidimensionale Struktur 2 oder Teile dieser dreidimensionalen Struktur 2 exakt zugeordnet werden können. Damit ist es möglich, dass beim zeitig versetzten Bearbeiten von Objekten 3 bzw. dann wenn die Objekte in unterschiedlicher Reihenfolge in verschiedenen Applikationsvorrichtungen 4 und 19 zugeführt werden, Verwechslungen zu vermeiden und eindeutige Erkennungen vorzunehmen.

Selbstverständlich sind auch diese Sensorvorrichtungen 29,30 über Steuerleitungen 31 mit der zentralen Steuervorrichtung 9 bzw. der Bilddatenverarbeitungs- und/oder-erkennungsvorrichtung 10 verbunden.

Über die Steuerleitungen 31 (strichliert dargestellt) sind auch die weiteren Vorrichtungsteile beispielsweise ein Antrieb 32 für die Positioniervorrichtung 7 bzw. die Vorschubvorrichtung der Positioniervorrichtung wie beispielsweise dem Bandriemensystem 8 sowie eine zwischen den Applikationsvorrichtungen 4 bzw. 19 oder einer oder beider diesen nachgeordnete Trockenvorrichtungen 33 und/oder Härtevorrichtungen 34 mit der Steuervorrichtung 9 verbunden. Zwischen den Applikationsvorrichtungen 4, 19 bzw. der Trockenvorrichtung 33 und der nachfolgenden Applikationsvorrichtung 4 und/oder zwischen der Applikationsvorrichtung 4 und der dieser nachgeordneten Härtevorrichtung 34 oder dieser Härtevorrichtung 34 in Förderrichtung 18 nachgeordnet, können Abkühlstrecken 35 mit jeweils an die jeweiligen Bedürfnisse angepasster Länge 36 angeordnet sein.

Zusätzlich ist die Steuereinrichtung 9 mit den Applikationsvorrichtungen 4, 19 bzw. deren Abgabevorrichtungen 17 verbunden und greift auf die Bilddaten für das Motiv 11, die bevorzugt in der Bilddatenverarbeitungs- und/oder -erkennungsvorrichtung 10 abgelegt bzw. bearbeitet oder erstellt werden zu. In dieser Bilddatenverarbeitungs- und/oder-erkennungsvorrichtung 10 können die Bilddaten der einzelnen Motive 11 sowie die Daten des Verlaufes und der räumlichen Ausbildung der dreidimensionalen Struktur 2 getrennt oder miteinander verknüpft abgelegt sein. Die Steuervorrichtung 9 bzw. die Bilddatenverarbeitungs- und/oder -erkennungsvorrichtung 10 kann aber auch die notwendigen Informationen für den Verlauf der dreidimensionalen Struktur 2 in den Raumrichtungen 26, 27, 28 einer Ebene sowie quer dazu aus einem Farbauszug bzw. aus einer mathematischen Kombination mehrerer Farbauszüge errechnen.

Dieses Errechnen der Steuerdaten für die Ansteuerung der Abgabevorrichtungen 17 der Applikationsvorrichtung 4 und 19 kann bereits vor Beginn des Produktionsprozesses erfolgen. Es ist aber auch möglich diese Berechnung "on the fly" das heißt also kontinuierlich während der Produktion bzw. der Bearbeitung der Objekte 3 durchzuführen.

Zum Austragen der Tropfen 12 und 13 sowohl hinsichtlich der auf die Flächeneinheit der Oberfläche 6 des Objektes 3 abgegebenen Anzahl der Tropfen bzw. des einzelnen Tropfenvolumens sind den Düsen der Abgabevorrichtung 17 einzelne Austragvorrichtungen 37 zugeordnet, die entsprechend der quer bzw. senkrecht zur Auflagefläche 25 verlaufenden Höhe der dreidimensionalen Struktur 2 zur Abgabe einer geringeren oder höheren Anzahl von Tropfen 12 und 13 auf die Oberfläche 6 des Objektes 3 angesteuert werden. Es ist aber auch möglich, mehrere Abgabevorrichtungen 17 nebeneinander oder versetzt zueinander anzuordnen oder diese auch quer zur Vorschub- bzw. Fördereinrichtung entsprechend dem Pfeil 18 anzuordnen, um eine entsprechend hohe Auflösung bei der Abgabe der Tropfen 12 und 13 der strukturbildenden Masse 14 bzw. des mit Partikel 15 versehenen Fluides 16 vorzusehen, wie dies beispielsweise aus der Beschreibung der WO 2006/084614 A und der AT 512 317 A der gleichen Anmelderin die zum Inhalt dieser Beschreibung gemacht wird, im Detail erläutert ist. Die Austragvorrichtungen 37 können mit einem Antrieb wie einen Piezo-Antrieb, einen Valve-Jet-Antrieb, einen elektrostatischen, thermischen oder akustischen Antrieb versehen sein.

Ebenso ist es möglicht, einen Continuous-Ink-Jet-Antrieb zu verwenden.

Die einzelnen Düsen der Abgabevorrichtungen 17 können auch in mehreren Reihen hintereinander angeordnet sein.

Als Sensorvorrichtungen 29, 30 können insbesondere Positionssensoren bzw. bevorzugt optoelektronische Positionssensoren eingesetzt werden.

Selbstverständlich ist es auch möglich, eine andere Art von Sensoren beispielsweise hochauflösende Lichtschranken, Kamerasysteme, Erkennungsvorrichtungen oder taktile Sensoren, beispielsweise Fühler oder dergleichen einzusetzen. Diese können zum Abstasten der dreidimensionalen Struktur 2 oder eines Teils davon ausgebildet sein oder zum Erkennen von Motiven 11 bzw. Markierungen oder dreidimensionalen Markierungen zum Identifizieren der einzelnen Objekte 2 bzw. der diesen Objekten zuzuordnenden bzw. aufzubringenden Motive 11 oder dreidimensionalen Strukturen 2.

Wie nun weiters die Fig. 4 zeigt, können die in Fig. 1 dargestellten Abgabevorrichtungen 17 so angeordnet bzw. ausgebildet sein, dass sie über eine Breite 38 des Objektes 3 sowohl Fluidtropfen 20, 21 zum Aufbringen des Motivs 24 zum Beispiel mit der Applikationsvorrichtung 19 als auch zum Aufbringen der strukturbildenden Masse 14 durch die Tropfen 12 und 13 mit der Applikationsvorrichtung 4 möglich ist.

Im gezeigten Ausführungsbeispiel wird beim Durchlauf des Objektes 3 beispielsweise über die gesamte Oberfläche in den Applikationsvorrichtungen 4 und 19 zugewandte parallel zur Auflagefläche 25 verlaufende Oberfläche ein Motiv 24 durch Aufbringen von Tropfen 20, 21 hergestellt. Die dreidimensionale Struktur 2 wird im vorliegenden Ausbildungsbeispiel beispielsweise durch halbzylinderförmige Erhebungen 39 gebildet, die sich quer zur Förderrichtung 18 des Objektes 3 erstrecken. Diese Erhebungen 39 können beispielsweise wie bereits vorher erwähnt Linsen zur Erzeugung verschiedener optischer Effekte in Verbindung mit den darunter liegenden Motiv 24 bilden. Diese Erhebungen 39 weisen dabei eine Höhe 40 auf, die im vorliegenden Fall über die gesamte Breite 38 gleich hoch ist.

Selbstverständlich ist es auch möglich, die Erhebungen sowohl in ihrer Ausdehnung in Förderrichtung 18 als auch in ihrer Höhe 40 die in Raumrichtung 28 gerichtet ist, unterschiedlich hoch auszuführen.

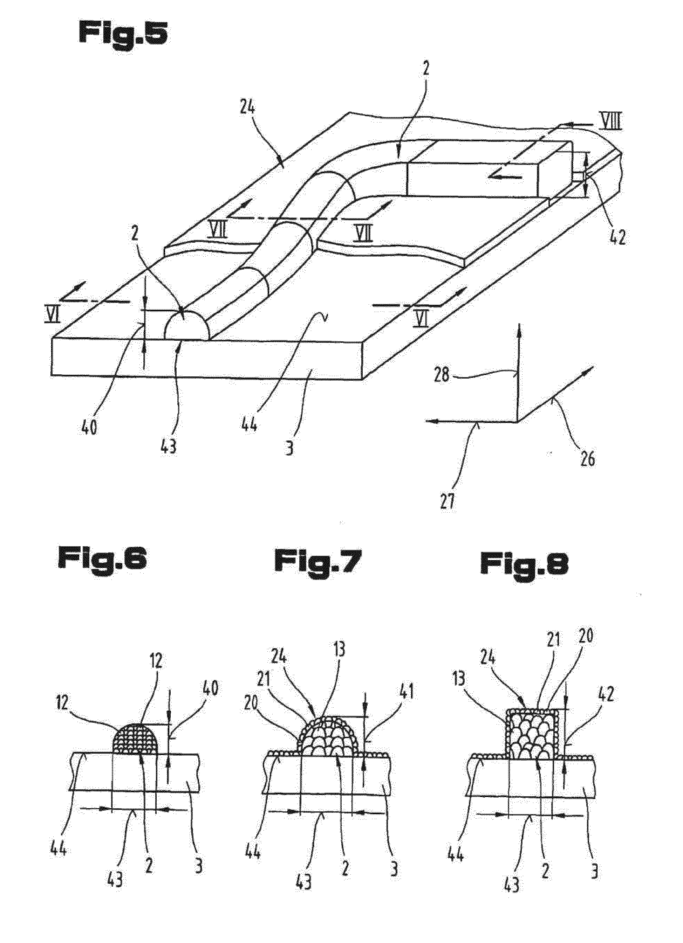

Mit dem erfindungsgemäßen Verfahren ist es möglich, diese Höhe 40 durch aufeinanderfolgendes Auftragen von Tropfen 12, 13 gegebenenfalls mit unterschiedlichen Volumen und einer unterschiedlichen Anzahl pro Flächeneinheit - wie dies im nachfolgenden anhand der Fig. 5 bis 9 noch näher erläutert werden wird - herzustellen. Um den Aufbau der Höhe der Struktur bzw. der Bildung der Höhe 40 der Erhebungen 39 zu beschleunigen ist es auch möglich, zwischen den einzelnen Abgabevorrichtungen 17 jeweils Trockenvorrichtungen 33 und/oder Härtevorrichtungen 34 vorzusehen.

In den Fig. 5 bis 9 sollen nun die Möglichkeiten des erfindungsgemäßen Verfahrens zur Herstellung eines Motivs 24 bzw. einer dreidimensionalen Struktur 2 näher erläutert werden.

Dazu ist eine räumlich gekrümmte dreidimensionale Struktur gezeigt, die zum Teil in Raumrichtung 26 und anschließend in Raumrichtung 27 verläuft, sowie in Raumrichtung 28 unterschiedliche Höhen 40, 41, 42 aufweist.

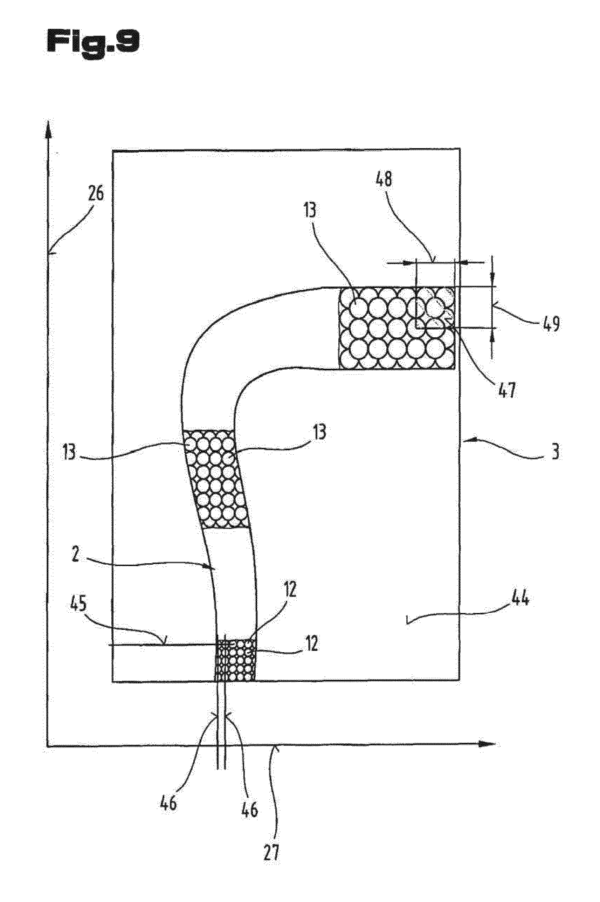

Aus der Darstellung der Fig. 6 ist zu ersehen, dass der Querschnitt der dreidimensionalen Struktur 2 aus einer Mehrzahl von Tropfen 12 mit geringem Volumen gebildet ist, wobei dieses Tropfen bzw. die dreidimensionale Struktur unmittelbar auf einen Teil 43 einer Oberfläche 44 des Objekts 3 aufgebracht ist. Der Verlauf der dreidimensionalen Struktur 2 in der durch die Raumrichtungen 26 und 27 gebildeten Ebene wird durch die gesteuerte Abgabe der Tropfen 12 in dem durch die Raumrichtungen 26, 27 gebildeten Koordinatensystem exakt festgelegt. Wobei beispielsweise wie in Fig. 9 dargestellt, eine Reihe der Tropfen 12 entlang der Koordinate 45 in Raumrichtung 26 und in Raumrichtung 27 an den Schnittpunkten der Koordinate 45 mit Koordinate 46 aufgebracht werden.

Wie aus der darstellenden Fig. 6 zu ersehen ist, werden zum Herstellen der dreidimensionalen Struktur 2 eine hohe Anzahl von Tropfen 12 mit kleinen Volumen 12 benötigt um die Höhe 40 herstellen zu können. Im Gegensatz dazu zeigt die Abbildung in Fig. 7, dass die Höhe 41 der dreidimensionalen Struktur 2 auch durch eine geringere Anzahl von Tropfen 13 mit größerem Volumen hergestellt werden kann. Auch hier werden die einzelnen Tropfen 13 entsprechend dem durch die Raumrichtungen 26 und 27 definierten Koordinatensystem auf das Objekt 3 bzw. zumindest einen Teil 43 der Oberfläche 44 aufgebracht.

In diesem Ausführungsbeispiel ist weiters gezeigt, dass die Tropfen 20, 21 nachträglich, das heißt nach dem Aufbringen der dreidimensionalen Struktur 2 bzw. Tropfen 13 auf die so hergestellte dreidimensionale Struktur 2 zur Bildung des Motivs 24 aufgebracht werden können. Der Oberflächenverlauf oder Querschnitt und die Ausbildung der Oberfläche der dreidimensionalen Struktur 2 mit einer glatten oder vorstrukturierten oder rauen Oberfläche kann durch die Anzahl und das Volumen und die Platzierung der einzelnen Tropfen 12, 13, 20, 21 unter Umständen in verschiedenen Raumrichtungen 26, 27, 28 in den einzelnen Lagen versetzt zueinander exakt gesteuert werden.

Ebenso ist es möglich, dass die Oberfläche 44 des Objektes 3 glatt oder vorstrukturiert oder mit einer entsprechenden Rauhigkeit versehen ist.

Des Weiteren ist in der Zusammenschau der Fig. 5 bis 8 gezeigt, dass auch unterschiedliche Querschnittsformen der dreidimensionalen Struktur 2 herstellbar sind. Während der Querschnitt der dreidimensionalen Struktur 2 in Fig. 7 etwa halbkreisförmig ausgebildet ist, weist die dreidimensionale Struktur 2 in der Fig. 8 einen etwa quadratischen Querschnitt auf. Auch in diesem Fall ist wie übrigens auch in Fig. 7 schematisch dargestellt, die gesamte Oberfläche des Objekts 3 sowie der dreidimensionalen Struktur 2 die ebenfalls aus Tropfen 13 mit höherem Volumen hergestellt ist, mit Tropfen 20, 21 der Applikationsvorrichtung 19 zum Aufbringen eines mit Pigmenten 22 versehenen Fluides 23 zur Bildung eines Motives 24 beschichtet. Nur der Vollständigkeit halber sei erwähnt, dass das Motiv 24 in Fig. 5 nur in Teilbereichen der dreidimensionalen Struktur 2 dargestellt ist.

In Fig. 9 ist weiters schematisch noch gezeigt, dass die Höhe 40, 41, 42 der dreidimensionalen Struktur 2 von dem auf eine Flächeneinheit 47 abgegebenen Anzahl und dem Volumen der Tropfen 13 abhängig ist. Die Flächeneinheit 47 ist hierbei durch eine Länge 48 und eine Breite 49 definiert.

Durch die Steuervorrichtung 9 kann nun anhand der gewünschten Höhe 40, 41, 42 der dreidimensionalen Struktur 2 vordefiniert werden, welches Volumen mit den Tropfen 12, 13 aufgebracht werden muss um die gewünschte Höhe 40, 41, 42 zu erzielen. Dabei wird durch entsprechende Algorithmen oder Erfahrungswerte berücksichtigt, dass ein Teilvolumen dieser Tropfen 12, 13 durch Reaktion, Verdunstung in Wegfall kommen und dementsprechend ein höheres Volumen aufgebracht werden muss, um das benötigte Volumen insbesondere der mitaufgebrachten anorganischen Partikel 15 der strukturbildenden Masse 14 entsprechend zu bemessen.

Selbstverständlich ist es möglich, nach Auftrag eines gewissen Volumens an Masse 14, insbesondere nach einem Trocknungs- oder Vorhärte- bzw. Härtevorgang die Höhe 40, 41, 42 der dreidimensionalen Struktur 2 zu vermessen, um gegebenenfalls durch nachfolgende Applikationsvorrichtungen 4 die gewünschte Höhe 40, 41, 42 herzustellen.

Bei größeren Höhen 40, 41, 42 können sich als erforderlich erweisen, nach Auftragen einer gewissen Anzahl von Tropfen 12, 13 zumindest eine Zwischentrocknung oder Fixierung durchzuführen bevor die weiteren Tropfen 12, 13 der Masse 14 aufgebracht werden. Dabei ist es unerheblich, dass ein Single-Pass-Verfahren oder ein Scan-Verfahren zum Aufbringen der Tropfen 12, 13 eingesetzt wird.

Grundsätzlich ist jedoch festzuhalten, dass mit dem Aufbringen der Anzahl der Tropfen 12, 13 auf die Flächeneinheit 47, 50 zu verstehen ist, dass mehrere Lagen von Tropfen 12, 13 auf die Flächeneinheit 47 übereinander, also in Richtung der Raumachse 28 bzw. der Höhe 40, 41, 42 aufgebracht werden und somit mit der Anzahl der Tropfen 12, 13 auf der Flächeneinheit 47 sich die Höhe 40, 41, 42 entsprechend verändert.

Während in den vorstehenden Ausführungsbeispielen das Aufbringen von dreidimensionalen Strukturen 2 auf flächige Objekte 3 gezeigt worden ist, ist es im Rahmen der Erfindung selbstverständlich möglich, derartige Strukturen auch auf stab- , netzförmige oder sonstige Objekte 3 oder andersartige Tragkörper beispielsweise auf verlorene oder entfernbare Kernmaterialien gegebenenfalls nach vorherigem Aufbringen einer Trennmittelschicht aufzutragen, um eine beliebige Raumform beispielsweise auch gekrümmte Raumformung von stabförmigen Körpern mit über eine Länge unterschiedlicher Dicke oder Rohlinge bzw. Grünlinge für einen nachfolgenden Härte- oder Brennvorgang herzustellen.

Bevorzugt kann das vorliegende Verfahren zur Herstellung von Grünlingen in der Keramikindustrie bzw. zum Herstellen von Rohlingen für einen nachfolgenden Brennvorgang beispielsweise von Glasbauteilen oder auf Glasbauteile aufzubringende dreidimensionale Strukturen 2 eingesetzt werden. Vor allem bei der Herstellung von Fliesen aus Keramik erweist es sich als vorteilhaft, wenn die zu beschichtenden mit der dreidimensionalen Struktur 2 zu versehenen Objekten 3 unter den feststehenden Applikationsvorrichtungen 4 bzw. 19 hindurch bewegt werden. Beispielsweise ermöglichen mehrere hintereinander angeordnete Abgabevorrichtungen 17 einer solchen Applikationsvorrichtung 4 bzw. 19 eine größere Strukturhöhe. Die gewünschte Strukturhöhe bzw. Höhe 40 bis 42 kann aber auch an Stelle dessen oder zusätzlich durch eine Variation der Größe bzw. des Volumens der Tropfen 12, 13 oder die Anzahl der Tropfen pro Flächeneinheit 47 erreicht werden. Durch ein Überlappen der einzelnen Tropfen 12, 13 gegebenenfalls mit unterschiedlichen Volumen ist vorzugsweise ebenfalls ein präzises Erzielen eines gewünschten Strukturverlaufes oder einer gewünschten Höhe 40 bis 42 der Struktur möglich.

Damit es innerhalb der Applikationsvorrichtungen 4 und 19 nicht zu einer Sedimentation der strukturbildenden Masse 14 und/oder zu einer Verstopfung der Düsen kommt, sind verschiedene an sich bekannte Maßnahmen wie Rührwerke und/oder eine Zirkulationseinrichtung innerhalb des Leitungssystems einsetzbar. Über dies würde es sich empfehlen, die Düsen zweckmäßigerweise zyklisch zu reinigen.

Als strukturbildende Masse 14 kann unter anderem ein UV-härtendes Einkomponentenharz appliziert werden. Nach dem Aufbau der dreidimensionalen Struktur 2 kann das Objekt 3 beispielsweise die Keramikfliese oder die mit der dreidimensionalen Struktur 2 beschichteten Glasplatte mittels der Positioniervorrichtung 7 zur Härtevorrichtung 34 weiterbefördert werden. Die Härteeinrichtung 34 kann zum Beispiel UV- und/oder IR- und/oder Elektronenstrahler oder Laser umfassen.

Kommt beispielsweise ein UV-Strahler zum Einsatz so wird bei einem UV-härtenden Einkomponentenharz die aufgebrachte dreidimensionale Struktur 2 fest. Nach dem Härten das strukturierte Objekt 3 bzw. nach dem Brennen des Grünlings zu einer Keramikfliese wird dieses noch entlang einer Abkühlstrecke 35 weiter befördert, wodurch sie schließlich zur Verpackung bzw. zur Qualitätskontrolle gelangt.

Der Ablauf des erfindungsgemäßen Verfahrens zum Aufbringen einer dreidimensionalen Struktur 2 auf ein Objekt 3 mit der in Fig. 1 gezeigten Vorrichtung 1 kann nun wie nachstehend dargelegt erfolgen.

Mit der Applikationsvorrichtung 19 kann ein vorbestimmbares in der Bilddatenverarbeitungs- und/oder -erkennungsvorrichtung 10 gespeichertes Motiv 11 bzw. 24 auf die Oberfläche 6, 44 des Objektes 3 durch Auftragen einzelner Tropfen 20, 21 unter Verwendung der bekannten Tintenstrahldrucktechnik bzw. mit den Vorrichtungen und den Abläufen wie zuvor beschrieben aufgebracht werden.

Das Objekt 3 ist dabei, wie auch aus Fig. 4 ersichtlich, auf der Auflagefläche 25 beispielsweise der Positioniervorrichtung 7 bevorzugt in den Raumrichtungen 26, 27 und 28 exakt ausgerichtet.

Nachdem das Objekt 3 mit der Positioniervorrichtung 7 bzw. dem Bandriemensystem 8 unter der Applikationsvorrichtung 19 hindurch bewegt worden ist, kann es mit einer Trocknungsvorrichtung 33 beispielsweise einer UV-Lampe oder entsprechend anderen Energiestrahlungen in Abhängigkeit von dem verwendeten Fluid 23 getrocknet und/oder gehärtet werden.

Selbstverständlich ist es aber auch möglich, dass das Objekt 3 feststehend auf der Positioniervorrichtung 7 angeordnet ist und die Applikationsvorrichtung 19 relativ zum Objekt 3 bewegt wird.

Bevorzugt wird dann bei der weiteren Bewegung des Objektes 3 mit der Positioniervorrichtung 7 in Förderrichtung 18 mit der Sensorvorrichtung 29 und 30 unmittelbar vor dem Auftragen der dreidimensionalen Struktur 2 auf das Objekt 3 dessen Lage überprüft oder festgestellt, welche dreidimensionale Struktur 2 auf das zuvor aufgebrachte Motiv 11 auf das Objekt 3 mit der Applikationsvorrichtung 4 aufzubringen ist. Die entsprechenden Daten werden dann von der Bilddatenverarbeitungs- und/oder -erkennungsvorrichtung 10 bzw. der Steuervorrichtung 9 der Applikationsvorrichtung 4 zur Verfügung gestellt und wird während der weiteren Relativbewegung zwischen Applikationsvorrichtung 4 und dem Objekt 3 die dreidimensionale Struktur 2 durch Abgeben von Tropfen 12 und 13 mit den Abgabevorrichtungen 17 aufgebracht. Beispielsweise ist es hierbei nun möglich, wie besser aus Fig. 4 ersichtlich ist, nur auf einen Teil 5 der Oberfläche 6 des Objektes 3 bzw. das zuvor aufgebrachtes Motiv 24 bzw. 11 diese dreidimensionale Struktur 2 aufzubringen. Im vorliegenden Ausführungsbeispiel erstreckt sich die Applikationsvorrichtung 4 bzw. deren Abgabevorrichtungen 17 über die gesamte Breite 38 des Objektes 3 bzw. des Teiles 5 des Objektes 3 auf den die dreidimensionale Struktur 2 aufgebracht wird.

Dabei weist die dreidimensionale Struktur 2 in Förderrichtung 18 unterschiedliche Höhen, also Abstände von der Oberfläche 6 quer zur Auflagefläche 25 also in Raumrichtung 28 somit eine unterschiedliche Höhe auf. Dies wird durch entsprechende Ansteuerung der auf die Flächeneinheit abzugebenden Tropfen 12, 13 bzw. deren Volumen durch das Zusammenwirken der Steuervorrichtung 9 mit der Bilddatenverarbeitungs- und/oder -erkennungsvorrichtung 10 sowie den Abgabevorrichtungen 17 der Applikationsvorrichtung 4 bewirkt.

Nach dem Auftragen der dreidimensionalen Struktur 2 auf das Objekt 3 wird dieses weiterbewegt und kann die aufgebrachte Masse 14, bestehend aus dem Fluid 16 und den organischen Partikeln 15 mit der Trockenvorrichtung 33 getrocknet bzw. gegebenenfalls gehärtet werden.

Eine Härtung ist vor allem dann möglich, wenn die anorganischen Partikel beispielsweise durch Glasfritten, Glaspulver oder Aluminiumoxyd, keramische Pulver oder beispielsweise Pulver aus niederschmelzenden Metallen gebildet werden.

Das Aufbringen der strukturbildenden Masse 14 auf das Objekt 3 erfolgt bevorzugt während der kontinuierlichen Vorwärtsbewegung des Objektes 3. Die gewünschte Strukturhöhe kann durch die Variation der Tropfengröße und der Anzahl der Tropfen pro Flächeneinheit zum Beispiel einem Quadratmillimeter oder einem Quadratzentimeter exakt auf das gewünschte Ausmaß angepasst werden. Dadurch, dass die einzelnen Tropfen beim aufeinanderfolgenden Auftragen sich zumindest bereichsweise oder im Randbereich überlappen, ist es vorzugsweise zusätzlich möglich, eine ebene Oberfläche oder auch gekrümmte glatte Oberfläche durch das Auftragen der einzelnen Tropfen herzustellen.

Bevorzugt kann es eine strukturbildende Masse 14, zum Beispiel ein UV-härtendes Einkomponentenharz, aufgetragen werden. Im vorliegenden Fall wird die dreidimensionale Struktur 2 beispielsweise durch den Aufbau von parallel nebeneinander angeordneten halbzylindrischen Linsen zum Erzielen der dreidimensionalen Effektstruktur hergestellt.

Die Trocknungshärtevorrichtung können durch UV- und/oder IR- und/oder Elektronenbeamstrahler oder beispielsweise auch Laser oder dergleichen gebildet sein.

Im vorliegenden Ausführungsbeispiel kommt lediglich ein UV-Strahler zum Einsatz, sodass die aus einem UV-Härteeinkomponentenharz bestehende dreidimensionale Struktur 2 fest wird. Nach dem Härten wird das nun strukturierte Objekt 3, beispielsweise eine Keramikfliese, ein Glaspanel, ein Naturholzteil oder eine mit einem Naturfurnier beschichtete Platte entlang einer Abkühlstrecke 35 mit einer Länge 36 weiter befördert. Anschließend kann sie gegebenenfalls nach einer entsprechenden Qualitätskontrolle verpackt oder zur Weiterverarbeitung weiter transportiert werden.

Die Aufbereitung der Daten zum Abgeben der entsprechenden Tropfen 12 und 13 der Strukturbildenden Masse 10 kann mit dem aus dem Stand der Technik bekannten Datenverarbeitungssystemen erfolgen bei welchen die Bilder in allen drei Raumrichtungen in dünne Streifen zerlegt (interlace) werden, worauf diese abwechselnd Nebeneinander durch die Abgabe der entsprechenden Tropfen 12, 13 auf das Objekt 3 mit der Applikationsvorrichtung 4 hergestellt werden.

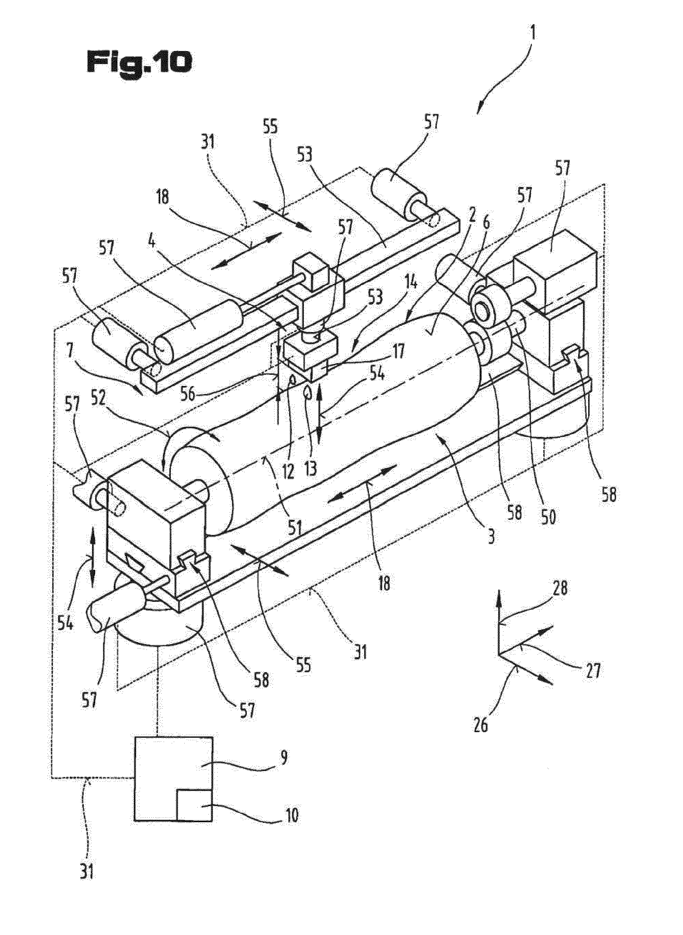

In der Fig. 10 ist eine weitere und gegebenenfalls für sich eigenständige Ausführungsform der Vorrichtung 1 zum Erzeugen der dreidimensionalen Struktur 2 gezeigt, wobei wiederum für gleiche Teile gleiche Bezugszeichen bzw. Bauteilbezeichnungen wie in den vorangegangenen Fig. 1 - 9 verwendet werden. Um unnötige Wiederholungen zu vermeiden, wird auf die detaillierte Beschreibung in den vorangegangenen Figuren hingewiesen bzw. Bezug genommen.

Es ist wie vorstehend bereits angedeutet und wie in Fig. 10 schematisch stark vereinfacht dargestellt auch möglich, Objekte 3 als Freiformkörper mit beliebiger Ausdehnung in beliebigen Raumrichtungen herzustellen.

Dabei kann es sich wie in Fig. 10 dargestellt als vorteilhaft erweisen, das Objekt 3 außer der Relativbewegung zwischen dem Objekt 3 und der Applikationsvorrichtung 1 bzw. Abgabevorrichtung 17 gemäß dem Doppelpfeil für die Förderrichtung 18 dieses auch um eine bevorzugt parallel zur Förderrichtung 18 verlaufende Achse rotieren, um einen in beliebigen Raum-richtungen wie z.B. 26,27,28 geformten dreidimensionalen Körper bzw. ein dreidimensionales Objekt 3 zu schaffen.

Bei einer derartigen Vorrichtung 1 kann beispielsweise das Objekt 3 auf einen Tragkörper 50 - der nachfolgend Bestandteil des Objektes 3 bleiben kann oder einen so genannten verlorenen Kern bilden kann - hergestellt werden. Die dreidimensionale Struktur 2 wird, gegebenenfalls nach Auftragen eines Trennmittels, auf diesen Tragkörper 50 durch das Aufbringen von Tropfen 12, 13 einer Masse 14 hergestellt. Die Tropfen 12, 13 können dabei wie anhand der vorstehenden Figuren erläutert, auch ein unterschiedliches Volumen haben und aus unterschiedlichen Fluiden 16, 22 mit unterschiedlich darin eingemischten Partikeln 15 bzw. Pigmenten 22 hergestellt werden.

Um nun diesen Freiformkörper entsprechend herstellen zu können, ist es erfindungsgemäß in vorteilhafter Weise auch möglich, sowohl die Applikationsvorrichtung 4 als auch das Objekt 3 in beliebigen Raumrichtungen 26,27,28 relativ zueinander zu bewegen, um diesen Freiformkörper oder eine komplexe dreidimensionale Struktur herstellen zu können.

So ist es beispielsweise möglich, die Applikationsvorrichtung 4 mit der Abgabevorrichtung 17 in den durch den Doppelpfeil angezeichnete Förderrichtungen 18 entlang des Tragkörpers 50 zu bewegen und dabei oder aufeinander folgend intermittierend das Objekt 3 bzw. den Tragkörper 50 um eine Rotationsachse 51 entsprechend dem Pfeil 52 zu verdrehen. Darüber hinaus ist es aber auch möglich die Applikationsvorrichtung 4 bzw. die Abgabevorrichtung 17 über entsprechende Führungsanordnungen 53 in Richtung des Pfeils 54 quer zum Tragkörper 50 kontinuierlich oder intermittierend zu verschieben.

Gleichermaßen ist es auch möglich, über die Steuervorrichtung 9 abgestimmt, die Applikationsvorrichtung 4 bzw. Abgabevorrichtung 17 und/oder den Tragkörper 50 relativ zueinander beispielsweise in Raumrichtung 28 gemäß den Pfeilen 54, und relativ zueinander beispielsweise in Raumrichtung 26 gemäß den Pfeilen 55, zu bewegen. Dadurch wird es einerseits möglich eine Distanz 56 zwischen der Oberfläche 6 des Objektes 3 und der Abgabevorrichtung 17 auf das jeweils gewünschte, optimale Ausmaß zum Abgeben und Platzieren von Tropfen 12, 13 und andererseits möglich Positionen quer zum Tragkörper 50 zwischen der Oberfläche 6 des Objektes 3 und der Abgabevorrichtung 17 einzustellen.

Mittels Antriebe 57, die durch jegliche aus dem Stand der Technik bekannte Mittel wie beispielsweise Zylinderkolbenanordnungen, Schrittschaltmotore oder dergleichen, gebildet sein können, können der Tragkörper 50 bzw. die Applikationsvorrichtung 4 auf den Führungsanordnungen 58,53 in den verschiedensten Raumrichtungen bewegt werden. Dabei ist es ohne weiters möglich, dass der Tragkörper 50 und die Applikationsvorrichtung 4 auch in den gleichen Raumrichtungen 26,27,28 relativ zueinander jeweils über eigene Antriebe 57 verstellt werden können. Die Ansteuerung und Positionierung der Antriebe 57 kann, wie dies schematisch durch dünne Linien angedeutet ist, über Leitungen durch die zentrale Steuervorrichtung 9 erfolgen.

Die Daten zur Abgabe der Tropfen 12, 13 mit der Abgabevorrichtung 17 können dazu in einer Bilddatenverarbeitungs- und/oder -erkennungsvorrichtung abgespeichert, vorbereitet und aufbereitet werden, sodass die entsprechenden Tropfen 12, 13 lagegenau zum Aufbau des Objektes 3 auf dessen Oberfläche 6 bzw. der Oberfläche des Tragkörpers 50 aufgetragen werden können.

Die Ausführungsbeispiele zeigen mögliche Ausführungsvarianten der Vorrichtung 1 zum Erzeugen der dreidimensionalen Struktur 2, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend darauf hingewiesen, dass zum besseren Verständnis des Aufbaus der Vorrichtung 1 zum Erzeugen der dreidimensionalen Struktur 2 diese bzw. deren Bestandteile teilweise unmaßstäblich und/oder vergrößert und/oder verkleinert dargestellt wurden.

Die den eigenständigen erfinderischen Lösungen zugrunde liegende Aufgabe kann der Beschreibung entnommen werden.

Vor allem können die einzelnen in den Fig. 1, 4, 9 und 10 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

**Bezugszeichenaufstellung**

| | | | |
|---|---|---|---|
| 1 | Vorrichtung zum Erzeugen dreidimensionaler Strukturen | 40 | Höhe |
| | | | |
| 2 | Dreidimensionale Struktur | 41 | Höhe |
| 3 | Objekt | 42 | Höhe |
| 4 | Applikationsvorrichtung | 43 | Teil |
| 5 | Teil | 44 | Oberfläche |
| | | 45 | Koordinate |
| 6 | Oberfläche | | |
| 7 | Positioniervorrichtung | 46 | Koordinate |
| 8 | Bandriemensystem | 47 | Flacheneinheit |
| 9 | Steuervorrichtung | 48 | Länge |
| 10 | Bilddatenverarbeitung- und/oder -erkennungsvorrichtung | 49 | Breite |
| | | 50 | Tragkörper |
| | | | |
| 11 | Motiv | 51 | Rotationsachse |
| 12 | Tropfen | 52 | Pfeil |
| 13 | Tropfen | 53 | Führungsanordnung |
| 14 | Masse | 54 | Pfeil |
| 15 | Partikel | 55 | Pfeil |
| | | | |
| 16 | Fluid | 56 | Distanz |
| 17 | Abgabevorrichtung | 57 | Antrieb |
| 18 | Förderrichtung | 58 | Führungsanordnung |
| 19 | Applikationsvorrichtung | | |
| 20 | Tropfen | | |
| | | | |
| 21 | Tropfen | | |
| 22 | Pigment | | |
| 23 | Fluid | | |
| 24 | Motiv | | |
| 25 | Auflagefläche | | |
| | | | |
| 26 | Raumrichtung | | |
| 27 | Raumrichtung | | |
| 28 | Raumrichtung | | |
| 29 | Sensorvorrichtung | | |
| 30 | Sensorvorrichtung | | |
| | | | |
| 31 | Steuerleitung | | |
| 32 | Antrieb | | |
| 33 | Trockenvorrichtung | | |
| 34 | Härtevorrichtung | | |
| 35 | Abkühlstrecke | | |
| | | | |
| 36 | Länge | | |
| 37 | Austragvorrichtung | | |
| 38 | Breite | | |
| 39 | Erhebung | | |

## Patentansprüche

1. Verfahren zum Erzeugen einer dreidimensionalen Struktur (2) mit einem Bildmotiv (11) auf zumindest einem Teil (5) einer Oberfläche (6) eines Objektes (3), bei der mit einer Abgabevorrichtung (17) einer durch eine Steuervorrichtung (9) gesteuerten Applikationsvorrichtung (4) Tropfen (12,13) einer strukturbildenden Masse (14) auf die Oberfläche (6) des Objektes (3) abgegeben werden und das Objekt (3) und die Applikationsvorrichtung (4) relativ zueinander bewegt werden und das Objekt (3) auf einer Positioniervorrichtung (7) positioniert gehaltert wird, wobei die Tropfen (12,13) der strukturbildenden Masse (14) mittels der Abgabevorrichtung (17) der Applikationsvorrichtung (4) auf die Oberfläche (6) des Objektes (3) positioniert abgegeben werden und das Verfahren **dadurch gekennzeichnet ist, dass** mit einer zweiten Applikationsvorrichtung (19) entweder vor dem Erzeugen der dreidimensionalen Struktur (2) das vorgegebene Bildmotiv (24) auf die Oberfläche (6) des Objektes (3) aufgebracht wird oder nach dem Erzeugen der dreidimensionalen Struktur (2) das vorgegebene Bildmotiv (11) auf die Oberfläche der dreidimensionalen Struktur (2) aufgebracht wird.

2. Verfahren nach Anspruch 1, **dadurch gekennzeichnet, dass** das Aufbringen des Bildmotivs (11) und das Aufbringen der dreidimensionalen Struktur (2) derart aufeinander abgestimmt werden, dass das Bildmotiv (11) und die dreidimensionale Struktur (2) deckungsgleich übereinander angeordnet werden.

3. Verfahren nach Anspruch 2, **dadurch gekennzeichnet, dass** das aufeinander Abstimmen des übereinander Aufbringens von Bildmotiv (11) und dreidimensionaler Struktur (2) anhand eines Messsignals einer der Applikationsvorrichtung (4, 19) zugeordneten Sensorvorrichtung (29, 30) erfolgt.

4. Verfahren nach zumindest einem der vorhergehenden Ansprüche, **dadurch gekennzeichnet, dass** das vorgegebene Bildmotiv (11) mittels der zweiten Applikationsvorrichtung (19) für Tropfen (20,21) aus mit Farbpigmenten (22) versehenen Fluiden (23) auf das Objekt (3) oder auf die dreidimensionale Struktur (2) aufgebracht wird.

5. Verfahren nach zumindest einem der vorhergehenden Ansprüche **dadurch gekennzeichnet, dass** im Verfahren die Position, die Anzahl und/ oder das Volumen der Tropfen (12,13) der strukturbildenden Masse (14) durch die Steuervorrichtung (9) in Abhängigkeit von der dreidimensionalen Struktur (2) in einer zu einer Auflagefläche (25) der Positioniervorrichtung (7) für das Objekt (3) parallelen Ebene in unterschiedlichen Richtungen, sowie in Richtung quer zur Ebene ermittelt wird.

6. Vorrichtung zum Erzeugen einer dreidimensionalen Struktur (2) mit einem Bildmotiv (11) auf zumindest einem Teil einer Oberfläche (6) eines Objektes (3), mit einer Applikationsvorrichtung (4) mit wenigstens einer Abgabevorrichtung (17), einer Positioniervorrichtung (7) mit einer Auflagefläche (25) für die Positionierung des Objektes (3) gegenüber der Applikationsvorrichtung (4) und mit einer Steuereinrichtung (9) zur Steuerung der Applikationsvorrichtung (4), der Positioniervorrichtung (7), wobei die Steuervorrichtung (9) die Steuerung aus der wenigstens einen Abgabevorrichtung (17) der Applikationsvorrichtung (4) austretenden Tropfen (12,13) der strukturbildenden Masse (14) in Abhängigkeit vom Verlauf und der quer insbesondere senkrecht zur Auflagefläche (25) auszubildenden Höhe (40) der dreidimensionalen Struktur (2) ermöglicht werden kann und die Vorrichtung **dadurch gekennzeichnet ist, dass** entlang der als Zufuhrrichtung ausgebildeten Positioniervorrichtung (7) vor oder nach der Applikationsvorrichtung (4) für die dreidimensionale Struktur (2) eine zweite Applikationsvorrichtung (19) angeordnet ist, welche die Applikation eines in der Steuervorrichtung (9) abgespeicherten Bildmotivs (11) auf das Objekt (3) oder auf die dreidimensionale Struktur (2) ermöglicht.

7. Vorrichtung nach Anspruch 6 **dadurch gekennzeichnet, dass** eine Sensorvorrichtung (29, 30) vorgesehen ist, welche dazu ausgelegt ist, die Position und eine Vermessung des Objektes (3) bzw. des Teils der Oberfläche des Objektes (3) auf welches ein Bildmotiv (11) und/oder eine dreidimensionale Struktur (7) aufgebracht werden, zu erfassen.

8. Vorrichtung nach Anspruch 7 **dadurch gekennzeichnet, dass** anhand des Signal der Sensorvorrichtung (29, 30) das Aufbringen des Bildmotivs (11) und das Aufbringen der dreidimensionalen Struktur (2) aufeinander abstimmbar sind.

9. Vorrichtung nach Anspruch 8 **dadurch gekennzeichnet, dass** die Sensorvorrichtung (29, 30) ein Positionssensor, vorzugsweise ein optoelektronischer Positionssensor ist.

10. Vorrichtung nach zumindest einem der Ansprüche 6 oder 9 **dadurch gekennzeichnet, dass** die Steuervorrichtung (9) eine integrierte oder mit einem Bussystem verbundene Bilddatenverarbeitungs- und/oder -erkennungsvorrichtung (10) für ein Bildmotiv (11) und/oder die dreidimensionale Struktur (2) umfasst.
